# EUROPEAN PATENT APPLICATION

(11) **EP 4 431 819 A1**
(43) Date of publication of application: **18.09.2024**
(21) Application number: 24163375.9
(22) Date of filing: 13.03.2024
(51) Int. Cl.: F24D 3/10, F24D 19/00, F24D 19/08, F24H 9/02, F24H 9/14

(54) **PRESSURE FILL DEVICE**

(30) Priority: 13.03.2023 GB 202303671
(71) Applicant: Stuart Turner Limited, Henley-on-Thames Oxfordshire RG9 2AD (GB)
(72) Inventor: SERVICE, Rob, Solihull, B94 6BD (GB)
(74) Representative: Dehns

(57) **Abstract**

A pressure fill device (1), comprising an inlet pipe, arranged to be connected, in use to a fluid supply, a system outlet pipe and a flow control arrangement, comprising a first flow control valve (12, 14). The first flow control valve (12, 14) comprises a first part and a second part, disassemblable from each other to enable maintenance of the first flow control valve (12, 14). The first part and the second part are joined, in use, by fixing means. The fixing means are movable or removable by engaging a removal portion of the fixing means. The pressure fill device (1) further includes a housing (70). The housing (70) includes a movable panel (72), movable between a first, covering position in which the movable panel (72) covers the first flow control valve (12, 14), and a second, open position in which the movable panel (72) does not cover the first flow control valve (12, 14). The removal portion of the fixing means faces towards the movable panel (72).

## Description

### BACKGROUND OF THE INVENTION

This invention relates to a pressure fill device.

It is known to provide closed-loop fluid circulation systems in both domestic and non-domestic properties, for example in order to provide heating or cooling to a property or to a heating or cooling system. It is furthermore known that such systems suffer losses over time, for example due to evaporation or even due to a leak, which cause the pressure in such systems to drop, and eventually cause the pressure in the system to need to be topped up.

It is known to provide pressure fill devices to supply additional fluid into closed-loop fluid circulation systems in order to increase the pressure and compensate for losses that have occurred over time. Some such devices are arranged to "top up" pressure in a closed-loop fluid circulation system without the need for a pump, by selectively connecting the closed-loop fluid circulation system to a pressurised fluid supply, such as a mains water supply. The pressure from the connected system allows the fluid in the closed-loop fluid circulation system to be "topped up" without the use of a pump.

The present invention seeks to provide an improved pressure fill device.

### SUMMARY OF THE INVENTION

From a first aspect, the invention provides a pressure fill device, comprising:
an inlet pipe, arranged to be connected, in use to a fluid supply;
a system outlet pipe;
a flow control arrangement, comprising a first flow control valve, wherein the flow control arrangement is arranged to selectively enable supply of fluid from the fluid supply to the system outlet pipe, at least in part by using the first flow control valve;
wherein the first flow control valve comprises a first part and a second part, disassemblable from each other to enable maintenance of the first flow control valve, the first part and the second part joined, in use, by fixing means, wherein the fixing means are movable or removable by engaging a removal portion of the fixing means;
the pressure fill device further comprising a housing, the housing comprising a movable panel, movable between a first, covering position in which the movable panel covers the first flow control valve, and a second, open position in which the movable panel does not cover the first flow control valve;
wherein the removal portion of the fixing means faces towards the movable panel.

Thus it will be seen that, in accordance with the invention, by arranging the fixing means, which connect two parts of a flow control valve together, to have its removal portion face towards a movable panel, the removal portion can be accessed easily when the movable panel is moved to the open position, and therefore maintenance of the valve, requiring separation of the first and second parts of the valve, can be carried out more easily and conveniently.

The removal portion of the fixing means faces towards the movable panel. By this it will be understood that the removal portion is oriented in a direction such that it is accessible directly through an opening created when the movable panel is moved to the open position, as opposed to being accessible along some other direction such that a tool or a person's hand seeking to remove the fixing means must first pass through the opening and then be reoriented within the housing to then be able to access the removal means.

It will furthermore be understood that the description given above (and the further description given below) of the relative positions and orientations of the pressure fill device apply when the pressure fill device is configured in its normal working arrangement, i.e., it is configured for normal operation of the device. Thus, the relative positions and orientations described above and below may not occur in other states of the pressure fill device, i.e. when it is disassembled.

In some embodiments, the movable panel defines an opening (e.g., a planar opening), which is covered by the movable panel in the first position and which is uncovered when the movable panel is in the second position. It will be understood that the opening need not be of substantially the same size as the movable panel. For example, the movable panel may be much larger than the opening. It will be understood that the opening is not required to be an opening in a physical structure (i.e. having edges that surround the opening), but rather that there is an area that is covered or uncovered (or occupied or unoccupied) depending on the position or configuration of the movable panel.

In some embodiments, the removal portion is a tool-engaging portion (i.e., suitable for engaging with a tool. For example the tool-engaging portion may be a bolt head, a screw head, a catch for a clip, or any other suitable tool-engaging portion. The tool may be an allen key, a screw driver, or any other suitable tool. The fixing means may be a bolt, a screw, a clip, a toggle, or any other suitable fixing means.

In some embodiments, the tool-engaging portion is arranged such that when a tool is engaged with the tool-engaging portion, the tool passes through the opening
In some embodiments the fixing means is removable by engaging a tool with the tool-engaging portion, wherein engaging the tool with the tool-engaging portion comprises moving said tool along a removal axis. In some embodiments the removal axis passes through the opening. By this it will be understood that in order to remove the fixing means (i.e., so that they no longer attach the first and second parts of the valve), a tool must move along a removal axis, to engage with the fixing means, where this removal axis passes through the opening or area that is exposed when the movable part is moved. Thus the movement of the movable panel to the opening position enables the tool to be freely moved along the removal axis, so as to remove the fixing means.

In other embodiments the fixing means is movable without being completely removed. The fixing means may be movable from a first, fixing position to a second, released position. This may for example be the case for a clip. Such a fixing means still has a removal portion (which may be a tool engaging portion) which is used to move the fixing means between the first position and the second position, the removal portion facing the opening, e.g. so that it can be accessed and moved by a tool inserted through the opening.

The opening may comprise a planar region (or the opening may be a planar opening) wherein the removal axis is substantially perpendicular to the planar region or planar opening. It will be appreciated that the removal axis being substantially perpendicular to the planar region or opening does not require that the removal axis is exactly perpendicular to the planar region or opening, it may include the removal axis being at an angle to the planar region or opening of less than 45°, optionally less than 35°, further optionally less than 25°, further optionally less than 15°.

From a second aspect, the invention further provides a method of disassembling a first flow control valve of a flow control arrangement of a pressure fill device, the pressure fill device further comprising:
an inlet pipe, arranged to be connected, in use to a fluid supply;
a system outlet pipe; and
a housing, the housing comprising a movable panel, movable between a first, covering position in which the movable panel covers the first flow control valve, and a second, open position in which the movable panel does not cover the first flow control valve, the movable panel defining an opening which is covered by the movable panel in the first position and which is uncovered by the movable panel in the second position;
the flow control arrangement arranged to selectively enable supply of fluid from the fluid supply to the system outlet pipe, at least in part by using the first flow control valve;
the method comprising:
   moving the movable panel to the second position, so as to provide the opening;
   engaging the tool with a removal portion of a fixing means of the first flow control valve, said fixing means joining a first part and a second part of the first flow control valve, wherein engaging the tool with the removal portion comprises moving the tool along a removal axis, wherein the removal axis passes through the opening; and
   moving or removing said fixing means.

It will be appreciated that removing the fixing means does not require that the fixing means is separated from both the first part and the second part, but rather only requires that the fixing means is removed from either the first part or from the second part (or possibly both) to the extent required to allow separation of the first part and the second part. For example, a clip that has been removed could remain attached to one of the parts but be disengaged from a corresponding latch or engagement portion on the other part.

Engaging the tool with the removal portion comprises moving the tool through the opening, along the removal axis. By this it will be understood that the tool is able to engage the removal portion by moving directly through the opening (or open plane), such that it does not require reorientating in order to engage the removal portion. As described above the opening may be planar (or comprise a planar region), and the removal axis may be substantially perpendicular to the plane of the planar opening or planar region.

In some embodiments, the flow control arrangement further comprises a second flow control valve, wherein the flow control arrangement is arranged to selectively enable supply of fluid from the fluid supply to the system outlet pipe using the first flow control valve and the second flow control valve. In some embodiments, the second flow control valve comprises a first part and a second part, disassemblable from each other to enable maintenance of the second flow control valve, the first part and the second part joined, in use, by second valve fixing means, wherein the second valve fixing means are movable or removable by engaging a removal portion of the second valve fixing means.

In some embodiments, the removal portion of the second valve fixing means faces towards the movable panel. By this it will be understood that the flow control arrangement includes two valves, each of which has parts attached together by respective fixing means, and where the removal portions of each respective fixing means both face towards the same movable panel. Thus, in the first, covering position the movable panel covers the second flow control valve, and in the second, open position the movable panel does not cover the second flow control valve.

In some embodiments, the removal portion of the second valve fixing means is a tool-engaging portion. For example the tool-engaging portion of the second valve fixing means may be a bolt head, a screw head, a catch for a clip, or any other suitable tool-engaging portion. The tool may be an allen key, a screw driver, or any other suitable tool. The fixing means may be a bolt, a screw, a clip, a toggle, or any other suitable fixing means.

In some embodiments, the second valve fixing means is movable or removable by engaging a tool with the tool-engaging portion of the second valve fixing means, wherein engaging the tool with the tool-engaging portion comprises moving said tool along a second valve removal axis. In some embodiments the second valve removal axis passes through the opening. In some embodiments, the second valve removal axis is substantially perpendicular to the planar opening. It will be appreciated that the second valve removal axis being substantially perpendicular to the planar region or opening does not require that the removal axis is exactly perpendicular to the planar region or opening, it may include the removal axis being at an angle to the planar region or opening of less than 45°, optionally less than 35°, further optionally less than 25°, further optionally less than 15°.

In an alternative embodiment, rather than facing towards the same movable panel, the first flow control valve and the second flow control valve may face towards separate movable panels. These separate movable panels may be parallel (i.e. in the same face of the housing) or may be perpendicular, or there may be a non-zero angle between the movable panels. The first valve removal axis may be substantially perpendicular to the second valve removal axis.

Thus, in some embodiments, the housing further comprises a second movable panel, movable between a first, covering position in which the movable panel covers the second flow control valve, and a second, open position in which the movable panel does not cover the second flow control valve. In some embodiments, the removal portion of the second valve fixing means faces towards the second movable panel.

The method may further comprise carrying out the same steps in respect of the second flow control valve as are recited in relation to the first flow control valve (either in relation to the same movable panel, or a separate movable panel, as described above).

The housing may define a front face of the housing, wherein the front face comprises the movable panel (and optionally also the second movable panel). Thus, both of the movable panels may be on the front face i.e. towards the forward direction of the housing. Alternatively, the front face of the housing may comprise the (first) movable panel and a side face of the housing may comprise the second movable panel. In other words, the housing may include one opening on its front face, towards which one of the flow control valve faces, and another opening on a side face of the housing, towards which the other flow control valve faces. It will be understood that a front face is a face of the housing that is furthest forward, when the pressure fill device is mounted on a wall, in a working position. In other words, it is a face of the housing furthest from the wall when the pressure fill device is wall-mounted in a working position. A side face will be understood as a face that is substantially perpendicular to the front face.

The movable panel may be a housing front panel, e.g., defining the entire front of the housing. The housing front panel may also comprise one or more housing side panels. The housing may contain the flow control arrangement. The housing may contain all of the other components of the pressure fill device (i.e., all components other than the housing itself).

The movable panel may be removable (i.e., able to be moved freely away from the rest of the housing of the pressure fill device, i.e., to separate from it). Alternatively, the movable panel may be arranged to move in a restricted manner relative to the rest of the housing (e.g. the movable panel may be hinged). This applies likewise to the second movable panel. One panel may be removable, whilst the other may only be movable (e.g., in a restricted way).

In some embodiments the first flow control valve is a solenoid valve. For example, the first flow control valve may be a pilot solenoid valve. Similarly, the second flow control valve may be a solenoid valve (e.g., a pilot solenoid valve). Solenoid valves may be biased into either a normally open position or a normally closed position depending on the system design.

The first flow control valve (and the second flow control valve, where present) comprise a first part and a second part. The flow control valve may further comprise a diaphragm, arranged between the first part and the second part. The fixing means may hold the diaphragm in position by joining, or clamping, the first and second parts together with the diaphragm between them. The diaphragm may comprise an opening (e.g., a small opening). The flow control valve may comprise a diaphragm spring, arranged to contact the diaphragm and bias the diaphragm towards a position in which the flow control valve is closed. The flow control valve (either, or both) may comprise a valve seat. The diaphragm may be moved (directly or indirectly) by the solenoid to close the valve by the diaphragm engaging with the valve seat or to open the valve by the diaphragm disengaging from the valve seat.

In some embodiments, the first flow control valve and/or the second flow control valve protrude towards a front of the housing (i.e., towards a front face of the housing). This may help to ensure that the removal portion of the fixing means faces towards the movable panel, it may even be required in order for the removal portion to face towards the removable panel as required. The first flow control valve and/or the second flow control valve may extend beyond the other components of the flow control arrangement.

In some embodiments, the fixing means (of the first control valve, and/or the second control valve) is a threaded fastener (e.g., a screw), and the removal portion of the fixing means is a tool-engaging head of a threaded fastener (e.g., a screw head). In some embodiments, the fixing means comprises more than one fixing means (e.g. more than one screw), optionally four fixing means (e.g., four screws), each comprising respective removal means. It will be understood that where the fixing means comprises more than one fixing means (e.g. more than one screw), the removal portion of each such fixing means (e.g., the screw head) will face towards the movable panel.

In some embodiments, the first flow control valve is an inlet pipe valve movable between an open position in which fluid is able to flow through the inlet pipe valve, and a closed position, in which fluid is prevented from flowing through the inlet pipe valve. The inlet pipe valve may be arranged within the inlet pipe, on the inlet pipe, or adjacent to an end of the inlet pipe.

In some embodiments, the inlet pipe valve is biased into a closed position. By this it will be understood that when not actuated or moved by an external force, the inlet pipe valve is by default in the closed position (i.e., the position in which the valve prevents flow). The inlet pipe valve must therefore be controlled or actuated to move to the open position, enabling flow.

In some embodiments, the flow control arrangement further comprises a drain, and a drain valve. In some embodiments, the first (or second) flow control valve is the drain valve. In some embodiments the drain valve is arranged between the system outlet pipe and the drain, the drain valve movable between an open position in which fluid is able to flow through the drain valve, and a closed position, in which fluid is prevented from flowing through the drain valve. By providing this drain valve, it is possible to selectively control when the drain is closed and when it is open, and to close the drain such that fluid supplied through the inlet pipe cannot exit through the drain and must therefore flow elsewhere, i.e., out of the system outlet pipe.

It will be understood that by the drain valve being arranged between the system outlet pipe and the drain there is a path from the system outlet pipe to the drain and the drain valve is located along that path. Said path does not have to define a direction of flow of the fluid through the pressure fill device. It also does not need to be a direct path, i.e. other intervening components could be connected between the system outlet pipe and the drain. For example, the system outlet pipe and the drain valve may each be connected to a manifold, such that there is a path from the system outlet pipe to the drain that passes through both the manifold and the drain valve.

In some embodiments, the drain valve is biased into an open position. By this it will be understood that when not actuated or moved by an external force, the drain valve is by default in the open position (i.e., the position in which the valve allows flow out of the drain). The drain valve must therefore be controlled or actuated to move to the closed position, preventing flow
In some embodiments, the flow control arrangement is arranged between the inlet pipe and the system outlet pipe. It will be understood that by this it is meant that the flow control arrangement is located on (or within) a path (not necessarily the fluid flow path) which passes from the inlet pipe to the system outlet pipe.

In some embodiments, the flow control arrangement further comprises a manifold, wherein the inlet pipe comprises a first end, connected to the manifold, and wherein the system outlet pipe comprises a first end, connected to the manifold. The manifold may comprise (e.g., at certain times during operation of the pressure fill device) an air gap. This air gap may help to prevent contamination of the fluid supply by the fluid within the fluid circulation system. The manifold may be made of any suitable material.

For example, the manifold may be a brass manifold or a plastic manifold (e.g. a moulded plastic manifold).

Although various separate components are described here, it will be appreciated that one or more of these components may be integrally formed, e.g. provided as a single integral component. Such a component may be more readily moulded, e.g. by injection moulding. For example, the manifold may be integrally formed with an inlet pipe and/or an outlet pipe and/or a drain pipe. The integral manifold may have mounting points into which the one or more flow control valves can be mounted. In some examples, parts of the flow control valves such as the inlet and outlet flow paths and the seal seat may be formed integrally with the manifold and/or with the inlet pipe and/or outlet pipe and/or drain pipe.

In some embodiments, the first end of the inlet pipe is connected to the manifold at a first position, wherein the first end of the system outlet pipe is connected to the manifold at a second position, and wherein the first position is above the second position. It will be understood that by the first position being above the second position it is meant that when the pressure fill device is oriented in its normal operating orientation (e.g. in its operating position, mounted on a wall), the first position it at a higher up position, along a vertical axis, than the second position. This of course does not require the first position to be directly vertically above the second position. This arrangement helps to reduce the contamination risk. Provided that the drain valve is open, fluid will never build up to the level of the inlet pipe. This reduces the risk of contaminating the fluid supply (which may be a mains fluid supply) that is connected to the inlet pipe with the system fluid. This air gap provides a further level of contamination protection in addition to any check valves installed in the inlet pipe and the outlet pipe.

The drain valve may be arranged specifically between the manifold and the drain. Thus, in some embodiments, the flow control arrangement further comprises a drain, and the first (or second) flow control valve is a drain valve, the drain valve arranged between the manifold and the drain, the drain valve movable between an open position in which fluid is able to flow through the drain valve, and a closed position, in which fluid is prevented from flowing through the drain valve.

In some embodiments, the inlet pipe comprises a back-flow prevention valve (e.g., a double check valve). This helps to prevent fluid flowing into the inlet pipe from downstream parts of the pressure fill device, such as the manifold, the system outlet pipe, and the drain. This therefore helps to prevent contamination of a fluid supply connected to the inlet pipe. This may make it safe for a mains water supply to be used as the fluid supply, since contamination of the mains water supply is prevented.

In some embodiments, the system outlet pipe comprises a back-flow prevention valve (e.g., a double check valve). This helps prevent fluid flowing out of the outlet pipe, back into upstream parts of the pressure fill device, such as the manifold, the inlet pipe, and the drain. This therefore helps to prevent loss of fluid from a fluid circulation system connected to the system outlet pipe even in the event that the pressure in the fluid circulation system is higher than the pressure in the pressure fill device. This furthermore helps to prevent contamination of a fluid supply connected to the inlet pipe, since no fluid is able to pass into the manifold from the fluid circulation system, and therefore no fluid is at risk of then passing back into the fluid supply. This may make it safe for a mains water supply to be used as the fluid supply, since contamination of the mains water supply is prevented.

In some embodiments, the pressure fill device comprises a pressure sensor connected to the inlet pipe. In some embodiments, the pressure fill device comprises a pressure sensor connected to the system outlet pipe.

In some embodiments, the pressure fill device is arranged to selectively produce a supply of fluid from the fluid supply to the system outlet pipe without the use of a pump (i.e. using only the pressure present in the fluid supply). In other embodiments, the pressure fill device further comprises a pump, and optionally also comprises a break tank upstream of the pump, wherein the pressure fill device is arranged to selectively produce a supply of fluid from the fluid supply to the system outlet pipe using the pump, and optionally also the break tank.

In some embodiments, the pressure fill device further comprises:
a circuitry layer, comprising control circuitry arranged to control operation of the flow control arrangement, the circuitry layer comprising:
a first portion;
a first circuitry component, mounted to the first portion;
a second portion;
a second circuitry component, mounted to the second portion, the second portion being recessed relative to the first portion, and the second circuitry component being thicker than the first circuitry component.

By recessed it will be understood that the second portion is set further back relative to the first portion (e.g., set back relative to the front of the housing).

The circuitry layer may be parallel to the movable panel. It may be parallel to the front panel of the housing.

The first circuitry component may comprise a printed circuit board, for example a control printed circuit board and/or a power printed circuit board. The first circuitry component may consist of one printed circuit board, or two circuit boards.

The second circuitry component may comprise at least one pressure transducer, optionally two pressure transducers. The second circuitry component may consist of one pressure transducer or two pressure transducers. It will be appreciated that the pressure transducer(s) are thicker (i.e., deeper) than the printed circuit board(s) and that therefore they are more conveniently accommodated on the recessed part of the circuitry layer (i.e., the portion of the circuitry layer that is set back relative to the rest of the circuitry layer).

Arranging the printed circuit board(s) on the first portion, and arranging the pressure transducer(s) on the separate, recessed second portion is particularly advantageous since the pressure transducer(s) connects to pipes of the pipework layer. Thus, there is a small risk that the connection into the pressure transducer(s) leaks fluid from inside the flow control arrangement, and positioning the pressure transducer(s) on the second portion keeps any leak away from the printed circuit board(s) which is arranged on the first portion.

In some embodiments, the circuitry layer is positioned so as to accommodate the first flow control valve behind the first portion. In some embodiments, the circuitry layer is positioned so as to also accommodate the second flow control valve behind the first portion. This conveniently allows the further forward (i.e., non-recessed) first portion of the circuitry layer to be positioned in front of the flow control valve(s), which themselves may protrude forwards (as described above). This reduces the overall depth (or thickness) of the housing needed for the pressure fill device, since the thicker valves are positioned behind the non-recessed (i.e., thinner) first portion of the circuitry layer, rather than the recessed portion which accommodates the thicker pressure transducer(s).

In some embodiments, the circuitry layer is arranged between the flow control arrangement and the movable panel. By this it will be understood that the circuitry layer is arranged between the flow control arrangement and at least a part of the movable panel. For example, the movable panel may be a housing front panel (i.e., the entire front of the housing, optionally also providing one or more housing side panels) and therefore the circuitry layer may be smaller (i.e., have a smaller footprint) than this front panel. For example, in this case, the circuitry layer will not be between the side panel(s) and the flow control arrangement.

The housing may contain the circuitry layer.

In some embodiments the circuitry layer is movable between a first position, in which the circuitry layer covers the flow control arrangement, and a second position, in which the circuitry layer does not cover the flow control arrangement. Thus, the circuitry layer is movable to allow access to the flow control arrangement that is arranged behind it. It will be appreciated that in such an arrangement both the movable panel, and also the circuitry layer, must be moved so that the removal portion of the fixing means is accessible.

The system outlet pipe may be arranged to be connected, in use, to a fluid circulation system, e.g. a closed-loop fluid circulation system. Thus, according to a third aspect of the present invention, there is provided a fluid circulation arrangement comprising:
a fluid circulation system; and
a pressure fill device having any of the features described above, wherein the system outlet pipe of the pressure fill device is connected to the fluid circulation system.

In some embodiments, the fluid circulation system is a closed-loop fluid circulation system.

In some embodiments, the fluid circulation arrangement further comprises a fluid supply, wherein the inlet pipe of the pressure fill device is connected to the fluid supply. The fluid supply may be a mains water supply.

The fluid circulation system may be for heating or chilling domestic or non-domestic premises or for heating a heating system and/or chilling a cooling system.

Features of any aspect or embodiment described herein may, wherever appropriate, be applied to any other aspect or embodiment described herein. Where reference is made to different embodiments or sets of embodiments, it should be understood that these are not necessarily distinct but may overlap.

### BRIEF DESCRIPTION OF THE DRAWINGS

Certain preferred embodiments of the invention will now be described, by way of example only, with reference to the accompanying drawings, in which:
Figure 1 is afront view showing components of a pressure fill device according to an aspect of the present invention;
Figure 2 is a flow diagram illustrating stages of the operation of the pressure fill device of Figure 1;
Figure 3 is a perspective view of the components shown in Figure 1;
Figure 4a is a cross-sectional view showing an example valve which may provide the inlet pipe valve and/or the drain valve, seen in Figure 1, in an open position;
Figure 4b is a cross-sectional view showing an example valve which may provide the inlet pipe valve and/or the drain valve, seen in Figure 1, in a closed position;
Figure 5 is an exploded view showing the valve of Figures 4a and 4b;
Figure 6 is an exploded view of a pressure fill device, comprising the components shown in Figure 1, and additionally including other components;
Figure 7 shows a front view of the circuitry layer shown in Figure 6; and
Figure 8 is a cross-sectional view from above of the pressure fill device of Figure 6.

### DETAILED DESCRIPTION

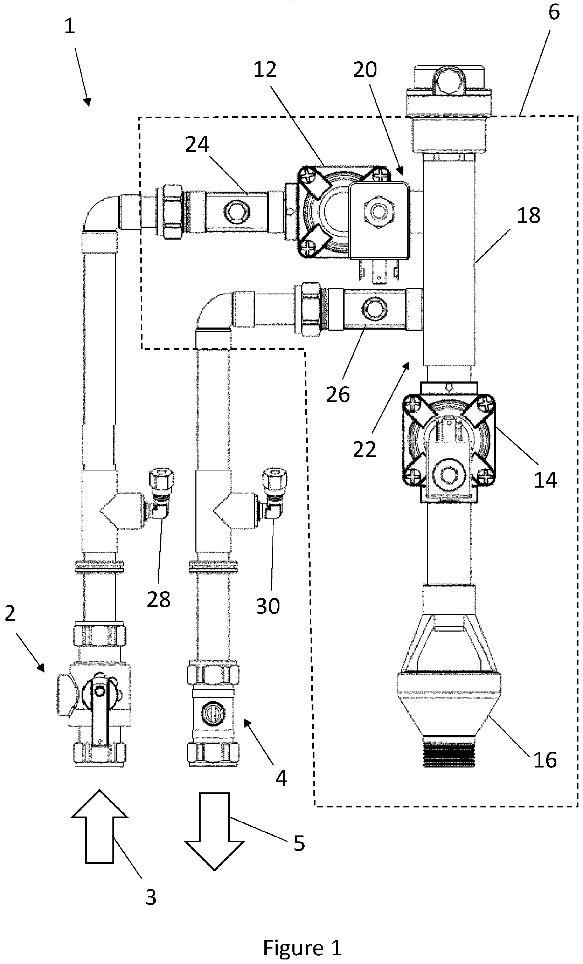

Figure 1 shows a pressure fill device 1. The pressure fill device 1 includes an inlet pipe 2, arranged to be connected, in use, to a fluid supply 3. The pressure fill device 1 also includes a system outlet pipe 4, arranged to be connected, in use, to a closed-loop fluid circulation system 5.

The pressure fill device 1 also includes a flow control arrangement 6, arranged to selectively enable supply of fluid from the fluid supply 3 to the system outlet pipe 4. The pressure fill device 1 is arranged to selectively produce a supply of fluid from the fluid supply 3 to the system outlet pipe 4 without the use of a pump, and using only the pressure of the fluid supply 3.

The flow control arrangement 6 includes an inlet pipe valve 12 (i.e., a first flow control valve), which in this example is a solenoid valve. The inlet pipe valve 12 is movable between an open position in which fluid is able to flow through the inlet pipe valve 12, and a closed position, in which fluid is prevented from flowing through the inlet pipe valve 12. In this example the inlet pipe valve 12 is located adjacent to the end of the inlet pipe 2, as shown in Figure 1. The inlet pipe valve 12 is biased towards the closed position, such that by default flow through the inlet pipe valve 12 is prevented and the valve must be actuated to allow flow through the inlet pipe 2.

The flow control arrangement 6 further includes a drain valve 14 (i.e., a second flow control valve), connected to the drain 16. The drain 16 allows fluid to flow out of the pressure fill device 1 (without flowing into the fluid circulation system 5 connected to the system outlet pipe 4).

The flow control arrangement 6 further includes a manifold 18. A first end of the inlet pipe 20 is connected to the manifold at a first position. A first end of the system outlet pipe 22 is connected to the manifold at a second position. The first position is higher than the second position, as seen in Figure 1. As seen it is the second ends of the inlet pipe 2 and the system outlet pipe 4 (i.e. the ends opposite to the first ends) that are connected, respectively, to the fluid supply 3 and the fluid circulation system 5.

The drain valve 14 is arranged between the manifold 18 and the drain 16. The drain valve 14, which in this example is a solenoid valve, is movable between an open position in which fluid is able to flow through the drain valve 14, and a closed position, in which fluid is prevented from flowing through the drain valve 14. The drain valve 14 is biased towards the open position, in which flow is enabled, such that by default fluid passing out of the inlet pipe 2 will flow through the manifold 18 and out of the drain 16. When the drain valve 14 is closed, fluid instead remains in the manifold 18 and then passes into the system outlet pipe 4, and therefore out into the fluid circulation system 5.

A first back-flow prevention valve 24 is located upstream of the inlet valve 12. In this example, the first back-flow prevention valve 24 is a double-check valve.

A second back-flow prevention valve 26 is located at the first end 22 of the system outlet pipe 4. In this example, the second back-flow prevention valve 26 is a double-check valve.

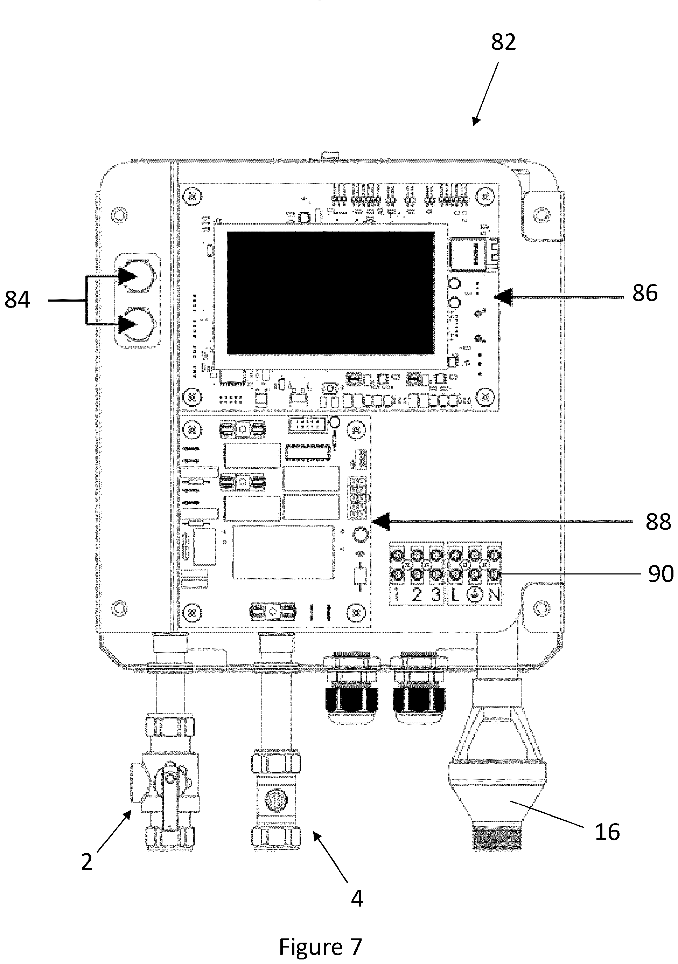

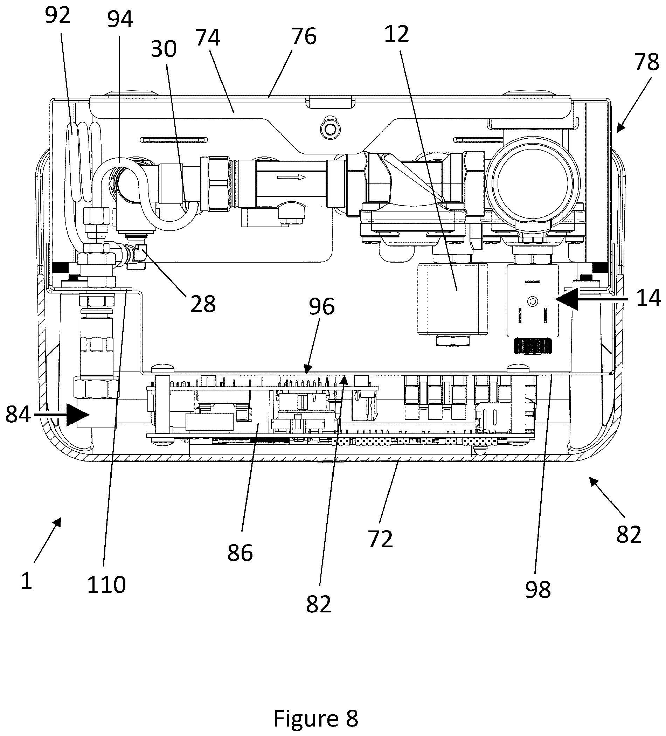

A first pressure sensor 28 is connected to the inlet pipe 2. A second pressure sensor 30 is connected to the system outlet pipe 4. The parts shown as "pressure sensors" in Figure 1 may in fact be connections to which additional circuitry or sensors are fitted to provide pressure sensing functionality (as described below with reference to Figures 7 and 8).

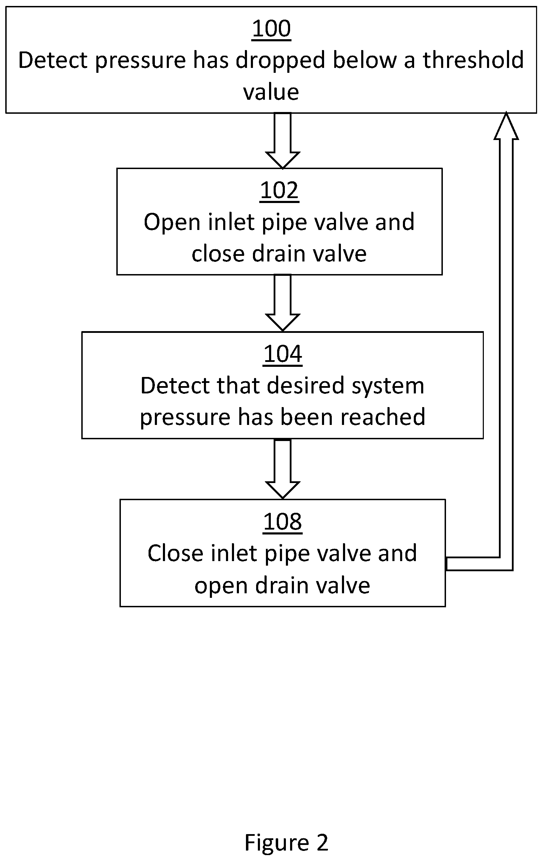

Figure 2 is a flow diagram illustrating stages of the operation of the pressure fill device of Figure 1.

At a first stage 100, it is detected, by pressure sensor 30, that pressure within the fluid circulation system 5 has dropped below a threshold pressure value (optionally for at least a threshold period of time). Responsive to this, a controller (not shown) of the pressure fill device 1, begins a pressure fill operation by moving to stage 102.

At stage 102, the inlet pipe valve 12 is opened, and the drain valve 14 is closed. As a result, fluid flows into the inlet pipe 2 from the fluid supply 3, through the first back-flow prevention valve 24, the inlet valve 12 and the manifold 18. Then, since the drain valve 14 is closed, the fluid flows through the second back-flow prevention valve 26, into the system outlet pipe 4, and out into the fluid circulation system 5, increasing pressure in the fluid circulation system 5. This occurs as a result of the pressure in the fluid supply 3 (e.g. a mains water supply) being higher than the pressure in the fluid circulation system 5. The pressure fill device 1 may check that the pressure in the fluid supply 3 is above a threshold amount, using the pressure sensor 28 connected to the system inlet pipe 2, before starting the fill operation, to make sure that the pressure is sufficient to achieve filling as desired.

At stage 104 it is detected, by pressure sensor 30, that the desired pressure has been achieved.

Once the required system pressure is achieved, (and possibly after a set time period has passed following this pressure being reached, during which filling is continued) the inlet valve 12 is closed again by the controller (not shown), stopping fluid from flowing out from the fluid supply 3 into the inlet pipe 2. This is stage 108 shown in Figure 2. At the same time, the drain valve 14 is opened. This allows fluid that is positioned between the inlet valve 12 and the drain valve 14 to flow out to the drain 16, creating an air gap within the manifold 18.

The pressure fill device 1 then remains at this stage 108, until a drop in pressure to below the threshold is detected, moving the device back to stage 100 in Figure 2, and beginning the cycle again. In other words, the cycle described above is repeated as and when the fluid circulation system 5 requires its pressure to be topped up.

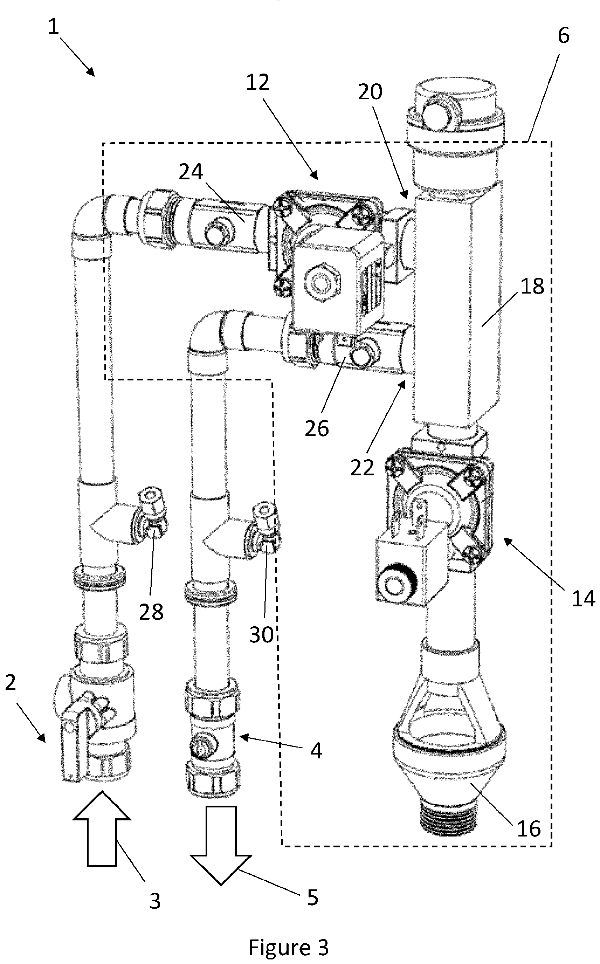

Figure 3 is a perspective view of the components shown in Figure 1. For clarity, the same reference numerals have been used as are used in Figure 1. From this view it can be seen that the inlet pipe valve 12 and the drain valve 14 protrude forwards relative to the rest of the components.

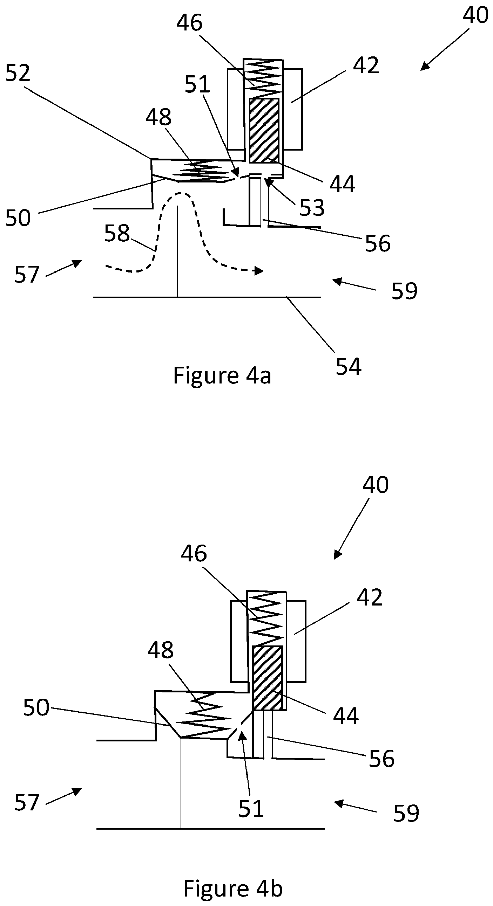

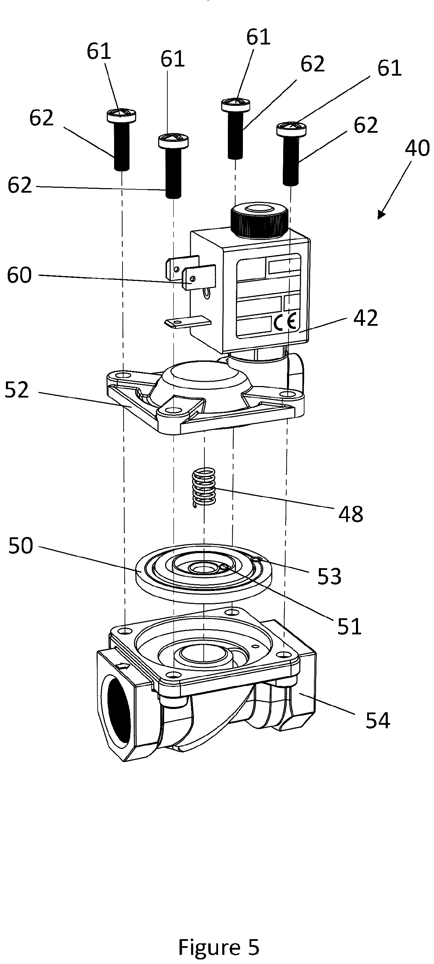

An example valve 40 that can be used for one or both of these valves 12, 14 is shown in cross-section in Figures 4a and 4b, and in an exploded view in Figure 5.

In this example, the valve 40 is a solenoid valve. It is referred to as such because it includes a solenoid electromagnet 42 which is selectively magnetised (by passing a current through it) in order to selectively move a plunger 44. The plunger 44 is biased by a plunger spring 46. The plunger spring 46 can either be arranged to bias the plunger 44 towards the open position (in which it is drawn upwards towards the solenoid 42, as seen in Figure 4a) or towards the closed position (in which it is moved downwards away from the solenoid 42, as seen in Figure 4b). The biasing of the plunger spring 46 determines whether the solenoid 42 must be activated to drive the valve 40 to the closed position, or to the open position, i.e. which position is the default position of the valve 40. As described above, the inlet pipe valve 12 is "normally closed" (i.e. with the plunger spring 46 biased towards the closed position), whereas the drain valve 14 is "normally open", (i.e. with the plunger spring 46 biased towards the open position). In each case the solenoid 42 is then activated to change the position of the plunger 44, and therefore change the valve 40 from open to closed or vice versa. Where the plunger 44 is biased towards the closed position, the solenoid 42 must be activated to attract the plunger 44, to draw it upwards. Conversely, where the plunger 44 is biased towards the open position, the solenoid 42 must be activated to repel the plunger 44, and push it downwards into the closed position.

The valve 40 further includes a diaphragm 50, and a diaphragm spring 48. There is a first small opening 51 in the diaphragm, closer to the diaphragm spring 48, and there is a second small opening 53 in the diaphragm, which overlaps with a channel 56 that is described below. The diaphragm spring 48 biases the diaphragm 50 downwards (with reference to the view of Figure 4a). It biases the diaphragm 50 away from an upper part 52 (i.e., a first part) of the valve 40, and towards from a lower part 54 (i.e. a second part), between which fluid passing through the valve flows.

When the plunger 44 is in the open position, shown in Figure 4a, a channel 56 formed in the lower part 54 is unblocked (i.e., open). Thus, fluid which flows into the chamber formed above the diaphragm 50, through the opening 51, is able to flow back out through the opening 53 and the channel 56 beneath the opening 53. The pressure in the chamber formed above the diaphragm 50 is therefore low. Conversely, the fluid flowing along the flow path 58 applies a high pressure to the lower side of the diaphragm 50, thus pushing it upwards towards the upper part 52 against the biasing force of the diaphragm spring 48.

When the plunger 44 is moved to the closed position (as seen in Figure 4b), by either activating or deactivating the solenoid 42, as appropriate, this results in the opening 53 and the channel 56 becoming sealed by the lower end of the plunger 44. As a result, pressure begins to build up behind the diaphragm 50, as additional fluid flows into the chamber from the valve inlet 57 through the opening 51 (note that opening 51 is still in fluid communication with valve inlet 57 in Figure 4b as the inlet 57 flows in a ring around the valve outlet 59). Thus, the pressure in the chamber above the diaphragm 50 rises and the pressure difference across the diaphragm 50 is no longer sufficient to overcome the biasing force of the diaphragm spring 48. Thus, the diaphragm spring 48 expands, pushing the diaphragm 50 downwards into the closed position, as seen in Figure 4b. As a result, there is no longer a fluid flow path 58 through the valve 40.

It will be appreciated that in the embodiment shown in Figures 4a, 4b and 5 the diaphragm 50 extends across the top of channel 56 and therefore needs to have an opening 53 in it. However, this is not necessary in other embodiments. A smaller diaphragm could avoid overlapping the channel 56 such that opening 53 would not be necessary.

An exploded view of the valve 40 is shown in Figure 5. In it are seen the lower part 54, the diaphragm 50 with small openings 51 and 53, the diaphragm spring 48, the upper part 52, and the solenoid 42 including electrical connections 60.

Fixing means 62 are also visible in Figure 5. In this example, the fixing means 62 are threaded screws, each with a cross-head 61. The cross-head 61 provides an engagement portion, with which a cross-head screwdriver can be engaged to remove the screws from the valve 40. This cross-head may therefore be referred to as a removal portion, since it is the portion that allows the screws 62 to be removed from the valve 40. The screws 62 attach the upper part 52 and the lower part 54 together, with the diaphragm 50 and diaphragm spring 48 in between them. Removal of the screws 62 allows the upper part 52 to be separated from the lower part 54, such that the internal parts of the valve 40 can be serviced and maintained. For example, it is preferable that the diaphragm 50 is cleaned, and possibly even replaced, regularly, in order for the valve 40 to continue to operate successfully. Removing the screws 62 can also make repairing faults with the valve 60 easier.

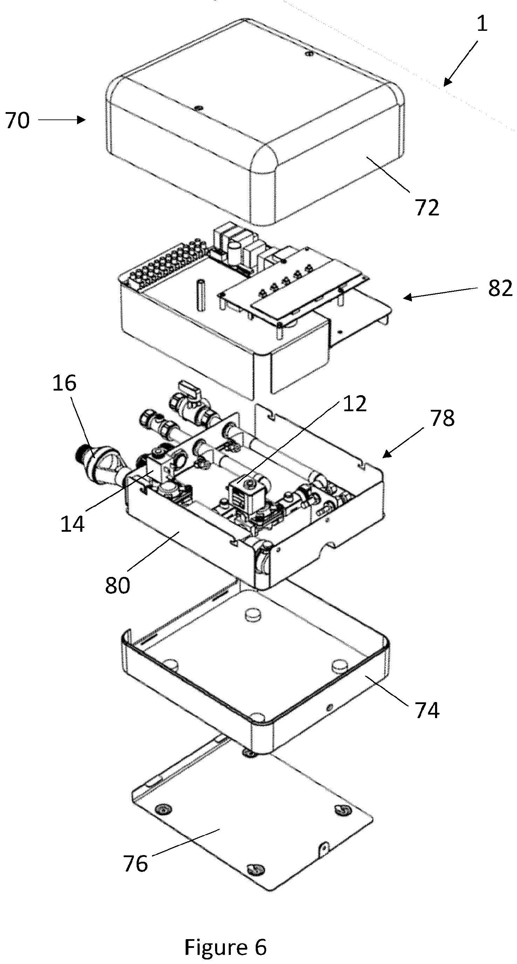

Figure 6 is an exploded view of a pressure fill device 1, comprising the components shown in Figure 1, and additionally including other components. The pressure fill device includes a housing 70, which contains the rest of its components. In the illustrated example, the housing 70 is made up of two parts - a front panel 72 and a rear panel 74. The rear panel 74 is mountable to a back plate 76, which itself can be attached (e.g. screwed) to a wall, to provide a mounting location for the pressure fill device 1.

The pressure fill device 1 further comprises a pipe-work layer 78, which includes all of the components illustrated in Figure 1. The pipe-work layer 78 further includes a surround 80, which surrounds the components of the pipe-work layer 78. As illustrated it covers each side of the pipe-work layer 78 and also cover the base (i.e., underneath the layer). However, it may cover only some of these surfaces.

The pressure fill device 1 further includes a circuitry layer 82, arranged above the pipe-work layer 78 (i.e. closer to the front panel 72 of the housing 70).

The front panel 72 is removable from the rest of the pressure fill device 1 to allow access to the components behind it. In other words, the entire front panel 72 (including the integral side panels) is removed from the pressure fill device to allow access to the layers underneath, in particular to the circuitry layer 82 and the pipework layer 78. Once the front panel 72 is removed from the housing it leaves behind a planar opening, corresponding to the area which was previously occupied by the planar front portion of the front panel 72. This planar opening is bounded by the top edge of the surround 80, but even if no surround were present it will be understood that the front panel 72 would still effectively define a planar opening which was revealed once the front panel 72 was removed. In an alternative example (not shown) some or all of the front panel 72 may be non-planar and therefore the "opening" (or part of it) defined when the movable panel (in this case the front panel) is removed may be considered as non-planar despite the fact that clear the opening itself, defined by negative space, cannot have a defined shape.

The circuitry layer 82 is also removable. Thus, in order to access the pipework layer 78, first the housing front panel 72 is lifted off the front of the housing, and then the circuitry layer 82 is removed from within the housing (after disconnecting any necessary electrical connections). After these have been removed, there will be an opening at the front of the housing (surrounded by the surround 80) through which the components of the pipework layer 78 are accessible. In particular, the screws heads 61 of the flow control valves 12, 14 all face towards the front panel 72, such that when this and the circuitry layer 82 are removed, a screwdriver can be inserted directly into these, through the resulting opening, perpendicular to the plane of the opening, and the screws can be unscrewed and removed easily by rotation of the screwdriver (with the screwdriver still perpendicular to the opening) so that the valves can be taken apart. Thus maintenance is simplified by virtue of the orientation of the flow control valves, and in particular of the removal portion of their respective fixing means.

A front view of the circuitry layer 82 is shown in Figure 7. Some components of the pipe-work layer 78 that are visible behind the circuitry layer 82 are illustrated for context.

The circuitry layer 82 includes pressure transducers 84, which are respectively connectable to the pressure sensor connections 28, 30 as shown in Figure 1. It also includes a control PCB 86 and a power PCB 88, as well as electrical power connections 90.

The control PCB 86 functions to receive inputs from the various sensors of the pressure fill unit, to analyse these inputs and to signal outputs of the pressure fill device based on this analysis.

The power PCB 88 controls the supply of power to the pressure fill device 1, and in particular to the inlet pipe valve 12 and the drain valve 14, to control fill operations of the pressure fill device 1.

Although the control PCB 86 and the power PCB 88 are shown as separate components, it will be appreciated that these functions may both be provided by a single PCB.

Figure 8 shows a cross-sectional view from above of the pressure fill device 1. The front panel 72 can be seen in the bottom part of the view, whilst the rear panel 74 is shown in the top part of the view, mounted to the back plate 76. The pipe-work layer 78 is positioned behind (i.e. in this cross-sectional view, above) the circuitry layer 82.

The pressure transducers 84 can be seen connecting to the pressure sensor connections 28, 30 via respective pipes 92, 94.

It can be seen that the circuitry layer 82 includes a substrate layer 96, including a first portion 98 and a second portion 110. The control PCB 86 and the power PCB 88 are mounted to the first portion 98 of the substrate layer 96. The pressure transducers 84 are mounted to the second portion 110. As can be seen from the cross-sectional view of Figure 8, the second portion 110 is recessed relative to the first portion 98. By this it is meant that the second portion 110 is set further back relative to the front of the housing than is the first portion 98.

This recess allows the pressure transducers 84 to be accommodated within the recess, since they are thicker than the PCBs 86, 88, but having the first portion be non-recessed, i.e. further forwards, allows the inlet pipe valve 12 and the drain valve 14, which protrude forwards, to be accommodated behind the first portion 98. This reduces the overall thickness of the housing, relative to if a substrate layer 96 without a recess were used.

It will be appreciated by those skilled in the art that the invention has been illustrated by describing one or more specific embodiments thereof, but is not limited to these embodiments; many variations and modifications are possible, within the scope of the accompanying claims.

## Claims

1. A pressure fill device, comprising:
an inlet pipe, arranged to be connected, in use to a fluid supply;
a system outlet pipe;
a flow control arrangement, comprising a first flow control valve, wherein the flow control arrangement is arranged to selectively enable supply of fluid from the fluid supply to the system outlet pipe, at least in part by using the first flow control valve;
wherein the first flow control valve comprises a first part and a second part, disassemblable from each other to enable maintenance of the first flow control valve, the first part and the second part joined, in use, by fixing means, wherein the fixing means are movable or removable by engaging a removal portion of the fixing means;
the pressure fill device further comprising a housing, the housing comprising a movable panel, movable between a first, covering position in which the movable panel covers the first flow control valve, and a second, open position in which the movable panel does not cover the first flow control valve;
wherein the removal portion of the fixing means faces towards the movable panel.

2. The pressure fill device of claim 1, wherein the movable panel defines an opening, which is covered by the movable panel in the first position and which is uncovered when the movable panel is in the second position, wherein the removal portion is a tool-engaging portion, wherein the tool-engaging portion is arranged such that when a tool is engaged with the tool-engaging portion, the tool passes through the opening.

3. The pressure fill device of claim 1 or 2, wherein the flow control arrangement further comprises a second flow control valve, wherein the flow control arrangement is arranged to selectively enable supply of fluid from the fluid supply to the system outlet pipe using the first flow control valve and the second flow control valve; optionally
wherein the second flow control valve comprises a first part and a second part, disassemblable from each other to enable maintenance of the second flow control valve, the first part and the second part joined, in use, by second valve fixing means, wherein the second valve fixing means are removable by engaging a removal portion of the second valve fixing means;
wherein the removal portion of the second valve fixing means faces towards the movable panel.

4. The pressure fill device of any preceding claim, wherein the movable panel is removable from the pressure fill device.

5. The pressure fill device of any preceding claim, wherein the housing defines a front face of the housing, and wherein the front face comprises the movable panel.

6. The pressure fill device of any preceding claim, wherein the first flow control valve is a solenoid valve.

7. The pressure fill device of any preceding claim, wherein the fixing means is a threaded fastener, and wherein the removal portion of the fixing means is a tool-engaging head of a threaded fastener.

8. The pressure fill device of any preceding claim, wherein the first flow control valve is an inlet pipe valve and movable between an open position in which fluid is able to flow through the inlet pipe valve, and a closed position, in which fluid is prevented from flowing through the inlet pipe valve; optionally
wherein the inlet pipe valve is biased into a closed position.

9. The pressure fill device of any of claims 1 to 8, wherein the flow control arrangement further comprises a drain, and wherein the first flow control valve is a drain valve;
the drain valve arranged between the system outlet pipe and the drain, the drain valve movable between an open position in which fluid is able to flow through the drain valve, and a closed position, in which fluid is prevented from flowing through the drain valve; optionally
wherein the drain valve is biased into an open position.

10. The pressure fill device of any preceding claim, wherein the flow control arrangement further comprises a manifold, wherein the inlet pipe comprises a first end, connected to the manifold at a first position, and wherein the system outlet pipe comprises a first end, connected to the manifold at a second position, wherein the first position is above the second position; optionally
wherein the flow control arrangement further comprises a drain, and a drain valve, the drain valve arranged between the manifold and the drain, the drain valve movable between an open position in which fluid is able to flow through the drain valve, and a closed position, in which fluid is prevented from flowing through the drain valve.

11. The pressure fill device of any preceding claim, further comprising:
a circuitry layer, comprising control circuitry arranged to control operation of the flow control arrangement, the circuitry layer comprising:
a first portion;
a first circuitry component, mounted to the first portion;
a second portion;
a second circuitry component, mounted to the second portion, the second portion being recessed relative to the first portion, and the second circuitry component being thicker than the first circuitry component; optionally
wherein the second circuitry component comprises at least one pressure transducer; and/or
wherein the first circuitry component comprises a printed circuit board.

12. The pressure fill device of claim 11, wherein the circuitry layer is positioned so as to accommodate the first flow control valve behind the first portion; optionally
wherein the flow control arrangement further comprises a second flow control valve, wherein the flow control arrangement is arranged to selectively enable supply of fluid from the fluid supply to the system outlet pipe using the first flow control valve and the second flow control valve, and wherein the circuitry layer is positioned so as to also accommodate the second flow control valve behind the first portion.

13. The pressure fill device of claim 11 or 12, wherein the circuitry layer is arranged between the flow control arrangement and the movable panel.

14. The pressure fill device of any of claims 11 to 13, wherein the circuitry layer is movable between a first position, in which the circuitry layer covers the flow control arrangement, and a second position, in which the circuitry layer does not cover the flow control arrangement.

15. A method of disassembling a first flow control valve of a flow control arrangement of a pressure fill device, the pressure fill device further comprising:
an inlet pipe, arranged to be connected, in use to a fluid supply;
a system outlet pipe; and
a housing, the housing comprising a movable panel, movable between a first, covering position in which the movable panel covers the first flow control valve, and a second, open position in which the movable panel does not cover the first flow control valve, the movable panel defining an opening which is covered by the movable panel in the first position and which is uncovered by the movable panel in the second position;
the flow control arrangement arranged to selectively enable supply of fluid from the fluid supply to the system outlet pipe, at least in part by using the first flow control valve;
the method comprising:
moving the movable panel to the second position, so as to provide the opening;
engaging the tool with a removal portion of a fixing means of the first flow control valve, said fixing means joining a first part and a second part of the first flow control valve, wherein engaging the tool with the removal portion comprises moving the tool along a removal axis, wherein the removal axis passes through the opening; and
moving or removing said fixing means; optionally
wherein the flow control arrangement further comprises a second flow control valve, wherein the flow control arrangement is arranged to selectively enable supply of fluid from the fluid supply to the system outlet pipe using the first flow control valve and the second flow control valve;
the method further comprising:
engaging the tool with a removal portion of the fixing means of the second flow control valve, said fixing means joining a first part and a second part of the second flow control valve, wherein engaging the tool with the removal portion comprises moving the tool along a removal axis, wherein the removal axis passes through the opening; and
moving or removing said fixing means.
